(19) Europäisches Patentamt
European Patent Office
Office européen des brevets

(11) **EP 2 921 790 B1**

(12) **EUROPÄISCHE PATENTSCHRIFT**

(45) Veröffentlichungstag und Bekanntmachung des Hinweises auf die Patenterteilung:
**10.05.2017 Patentblatt 2017/19**

(51) Int Cl.:
*F24D 11/02* *(2006.01)* *F24D 19/10* *(2006.01)*
*F24D 12/02* *(2006.01)* *G05D 23/19* *(2006.01)*

(21) Anmeldenummer: **15159151.8**

(22) Anmeldetag: **16.03.2015**

(54) **VERFAHREN ZUM STEUERN EINER HEIZANLAGE**

METHOD FOR CONTROLLING A HEATING SYSTEM

PROCÉDÉ DESTINÉ À LA COMMANDE D'UNE INSTALLATION DE CHAUFFAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2014 DE 102014205013**
**01.04.2014 DE 102014206118**

(43) Veröffentlichungstag der Anmeldung:
**23.09.2015 Patentblatt 2015/39**

(73) Patentinhaber: **Robert Bosch GmbH**
**70442 Stuttgart (DE)**

(72) Erfinder: **Potra, Joao**
**3830-292 Aveiro (PT)**

(56) Entgegenhaltungen:
**EP-A1- 2 559 953      FR-A1- 2 935 781**
**US-A1- 2010 083 950**

**Beschreibung**

Die Erfindung betrifft ein Verfahren zum Steuern einer Heizanlage gemäß Patentanspruch 1 und ein Steuergerät zur Ausführung des Verfahrens gemäß Patentanspruch 6.

Stand der Technik

Im Stand der Technik ist es bekannt, eine Heizanlage mit zwei Heizungen vorzusehen. Dabei wird eine Heizung als Hauptheizung und eine zweite Heizung als Zusatzheizung eingesetzt, um die gewünschte Heizleistung bereitzustellen.

Aus EP 2 559 953 A1 und aus US 2010/083950 ist ein Verfahren zum Steuern einer Heizanlage für einen Wasserspeicher bekannt, wobei die Heizanlage eine Hauptheizung und eine Zusatzheizung aufweist, wobei zum Steuern der Hauptheizung und der Zusatzheizung ein vorgebbarer Wert für eine Betriebstemperatur des Wassers im Wasserspeicher und ein vorgebbarer Wert für eine Zeitdauer verwendet werden, wobei nur die Hauptheizung eingesetzt wird, um das Wasser auf die Betriebstemperatur in der Zeitdauer aufzuheizen, wenn eine Heizleistung der Hauptheizung ausreicht, und wobei die Zusatzheizung eingesetzt wird, um das Wasser im Wasserspeicher auf die Betriebstemperatur aufzuheizen, wenn die Heizleistung der Hauptheizung nicht ausreicht, um das Wasser auf die Betriebstemperatur in der Zeitdauer aufzuheizen.

Aus US 2010/083950 ist ein Steuergerät zum Steuern ein Heizanlage für einen Wasserspeicher bekannt, wobei die Heizanlage eine Hauptheizung und eine Zusatzheizung aufweist, wobei ein Wert für eine Betriebstemperatur des

Wasserspeichers vorgesehen ist, und wobei ein Wert für eine Zeitdauer vorgesehen ist, wobei das Steuergerät ausgebildet ist, um die Hauptheizung anzusteuern, um das Wasser im Wasserspeicher auf die Betriebstemperatur innerhalb der Zeitdauer aufzuheizen, wenn eine Heizleistung ausreicht, und wobei das Steuergerät ausgebildet ist, um zusätzlich die Zusatzheizung anzusteuern, um das Wasser im Wasserspeicher auf die Betriebstemperatur aufzuheizen, wenn die Heizleistung der Hauptheizung nicht ausreicht, um das Wasser auf die Betriebstemperatur innerhalb der Zeitdauer aufzuheizen.

Offenbarung der Erfindung

Die Aufgabe der Erfindung besteht darin, ein verbessertes Verfahren zum Steuern der zwei Heizungen einer Heizanlage bereitzustellen.

Die Aufgabe der Erfindung wird durch das Verfahren gemäß Patentanspruch 1 und durch das Steuergerät gemäß Patentanspruch 6 gelöst.

Ein Vorteil des beschriebenen Verfahrens besteht darin, dass die zwei Heizungen der Heizanlage effizient eingesetzt werden. Zudem kann die Heizanlage mithilfe von zwei einfachen, intuitiven Werten von einer Bedienperson eingestellt werden.

Die Vorteile werden dadurch erreicht, dass für den Betrieb der Heizanlage ein Wert für eine Betriebstemperatur für das Wasser des Wasserspeichers und ein Wert für eine Zeitdauer vorgegeben wird, innerhalb der die Heizanlage das Wasser des Wasserspeichers auf die Betriebstemperatur aufheizen muss. Die Betriebstemperatur des Wassers und die Zeitdauer sind intuitive Werte, die von einer Bedienperson ohne größere Kenntnis der Funktionsweise der Heizanlage zum Betreiben der Heizanlage vorgegeben werden können. Mithilfe der Betriebstemperatur und der Zeitdauer wird eine effiziente Bereitstellung der gewünschten Heizleistung der Heizanlage ermöglicht.

Die Heizanlage wird in der Weise betrieben, dass die Hauptheizung alleine eingesetzt wird, um das Wasser des Wasserspeichers auf die Betriebstemperatur aufzuheizen, wenn die Heizleistung der Hauptheizung ausreicht. Reicht die Heizleistung der Hauptheizung nicht aus, um das Wasser des Wasserspeichers innerhalb der vorgegebenen Zeitdauer auf die Betriebstemperatur aufzuheizen, so wird zusätzlich die Zusatzheizung eingesetzt, um das Wasser im Wasserspeicher auf die Betriebstemperatur aufzuheizen. Mithilfe dieses Verfahrens wird sichergestellt, dass die Hauptheizung die Hauptlast beim Betreiben der Heizanlage trägt und die Zusatzheizung für Heizleistungsspitzen eingesetzt wird.

Die Hauptheizung in Form einer Wärmepumpe ausgebildet. Abhängig von der Temperatur des Wasserspeichers und abhängig von der Temperatur eines Mediums, aus dem die Wärmepumpe Energie bezieht, wird eine Heizleistung der Wärmepumpe ermittelt. Abhängig von der Heizleistung der Wärmepumpe wird überprüft, ob die Heizleistung der Wärmepumpe zum Aufheizen des Wasserspeichers innerhalb der Zeitdauer ausreicht. Ist dies nicht der Fall, wird zusätzlich die Zusatzheizung eingesetzt. Zudem wird abhängig von der Temperatur des Wassers des Wasserspeichers und der vorgegebenen Betriebstemperatur eine Aufheizenergie ermittelt, die notwendig ist, um den Wasserspeicher auf die Betriebstemperatur aufzuheizen. Die Aufheizenergie wird zusammen mit der Heizleistung der Wärmepumpe verwendet, um festzustellen, ob die Hauptheizung alleine ausreicht, um den Wasserspeicher innerhalb der Zeitdauer auf die Betriebstemperatur aufzuheizen.

Mithilfe dieses Verfahrens kann präzise entschieden werden, ob die Hauptheizung zum Bereitstellen der gewünschten Wärmeleistung ausreicht. Zudem kann mithilfe der Wärmepumpe die Heizleistung relativ günstig bereitgestellt werden. In einer weiteren Ausführungsform ist die Zusatzheizung als elektrische Heizung ausgebildet. Die elektrische Heizung weist den Vorteil auf, dass die elektrische Heizung kostengünstig ist und zuverlässig funktioniert.

In einer weiteren Ausführungsform ist die Wärmepumpe in Form einer Luftwärmepumpe ausgebildet, die aus dem Medium Umgebungsluft Wärme aufnimmt. Bei dieser Ausführungsform wird zur Bestimmung der Heizleistung der Luftwärmepumpe eine Temperatur der Umgebungsluft gemessen und bei der Bestimmung der Heizleistung berücksichtigt. Damit ist eine präzise Steuerung der Heizanlage möglich.

In einer weiteren Ausführungsform wird während des Aufheizens des Wasserspeichers auf die Betriebstemperatur überprüft, ob die Heizleistung der Hauptheizung ausreicht, um den Wasserspeicher innerhalb der Zeitdauer auf die Betriebstemperatur aufzuheizen. Abhängig von dem Ergebnis des Vergleichs und abhängig von der Aktivierung der Zusatzheizung bzw. der Nichtaktivierung der Zusatzheizung wird die Zusatzheizung abgeschaltet oder wird die Zusatzheizung dazugeschaltet. Damit wird während des Aufheizvorganges ein optimaler Einsatz der Zusatzheizung erreicht. Wird z.B. während des Aufheizens mit der Hauptheizung und der Zusatzheizung festgestellt, dass die Hauptheizung ausreicht, um den Wasserspeicher innerhalb der Zeitdauer ohne weitere Unterstützung durch die Zusatzheizung aufzuheizen, so wird die Zusatzheizung abgeschaltet. Wird jedoch z.B. während des Aufheizens nur mit der Hauptheizung festgestellt, dass die Hauptheizung nicht ausreicht, um den Wasserspeicher innerhalb der Zeitdauer ohne weitere Unterstützung durch die Zusatzheizung aufzuheizen, so wird die Zusatzheizung dazugeschaltet.

Die Erfindung wird im Folgenden anhand der Figuren näher erläutert. Es zeigen

    Fig. 1 eine schematische Darstellung der Heizanlage,
    Fig. 2 eine schematische Darstellung eines Diagramms für Heizleistungskennlinien einer Wärmepumpe, und
    Fig. 3 eine schematische Darstellung eines Programmablaufs zum Betreiben der Heizanlage.

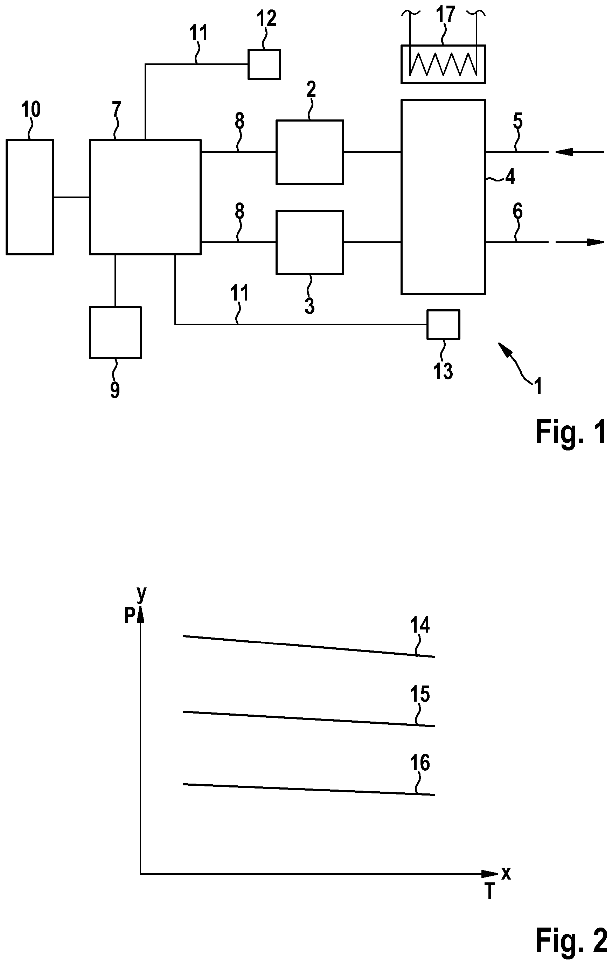

Fig. 1 zeigt in einer schematischen Darstellung eine Heizanlage 1, die eine Hauptheizung 2 und eine Zusatzheizung 3 aufweist. Die Hauptheizung 2 und die Zusatzheizung 3 stehen in Wirkverbindung mit einem Wasserspeicher 4. Der Wasserspeicher 4 ist Teil eines Heizsystems, mit dem beispielsweise warmes Brauchwasser oder warmes Wasser für eine Heizung mit Heizkörper und/oder mit einer Fußbodenheizung bereitgestellt werden kann. Der Wasserspeicher 4 steht mit einem Zulauf 5 und mit einem Ablauf 6 in Verbindung. Über den Zulauf 5 wird kälteres Wasser zum Wasserspeicher 4 zugeführt, als über den Ablauf 6 abgeführt wird. Anstelle oder zusätzlich zum Zulauf 5 und zum Ablauf 6 kann ein Wärmetauscher 17 vorgesehen sein, der dem Wasserspeicher 4 Wärme zum Betreiben einer Heizung entzieht.

Zudem ist ein Steuergerät 7 vorgesehen, das über Steuerleitungen 8 mit der Hauptheizung 2 und der Zusatzheizung 3 in Verbindung steht. Das Steuergerät 7 weist zudem einen Datenspeicher 9 auf. Weiterhin kann das Steuergerät 7 mit einer Eingabevorrichtung 10 in Verbindung stehen. Zudem steht das Steuergerät 7 über Sensorleitungen 11 mit einem ersten Temperatursensor 12 und mit einem zweiten Temperatursensor 13 in Verbindung.

Die Eingabevorrichtung 10 ist vorgesehen, damit eine Bedienperson Daten, Werte und/oder Parameter dem Steuergerät 7 oder dem Datenspeicher 9 übergeben kann. Zudem kann über die Eingabevorrichtung 10 beispielsweise ein bestimmtes Steuerprogramm aus mehreren Steuerprogrammen ausgewählt werden, wobei die Steuerprogramme im Datenspeicher 9 abgelegt sind. Insbesondere kann über die Eingabevorrichtung 10 eine Betriebstemperatur für das Wasser des Wasserspeichers 4 eingegeben werden. Zudem kann über die Eingabevorrichtung 10 eine Zeitdauer vorgegeben werden, innerhalb der die Heizanlage 1 den Wasserspeicher 4 auf die Betriebstemperatur aufheizen muss. Die Daten, die Parameter und insbesondere die Betriebstemperatur und die Zeitdauer können nach der Eingabe vom Steuergerät 7 im Datenspeicher 9 abgelegt werden. Abhängig von der gewählten Ausführungsform können die Daten, Parameter und insbesondere die Betriebstemperatur und die Zeitdauer bereits im Datenspeicher 9 abgespeichert sein. Zudem können die Daten auch über eine Schnittstelle, beispielsweise drahtlos über eine WLAN-Verbindung an das Steuergerät 7 übertragen werden. Im Datenspeicher 9 sind zudem Steuerprogramme, Berechnungsverfahren, Kennlinien, Kennfelder und Daten abgelegt, die zum Betreiben der Heizanlage 1, insbesondere zum Betreiben der Hauptheizung 2 und der Zusatzheizung 3 vom Steuergerät 7 benötigt werden.

Die Wärmepumpe kann beispielsweise der Umgebungsluft Wärme entziehen. Abhängig von der gewählten Ausführungsform kann die Wärmepumpe auch in Form einer Grundwasserwärmepumpe oder Bodenwärmepumpe ausgebildet sein. Zudem kann die Wärmepumpe in Form einer Solewärmepumpe ausgebildet sein.

Fig. 2 zeigt in einer schematischen Darstellung ein Diagramm, in dem mehrere Kennlinien für die Heizleistung der Hauptheizung 2 aufgetragen sind. Dabei ist entlang der x-Achse eine aktuelle Wassertemperatur T des Wasserspeichers 4 aufgetragen. Entlang der y-Achse ist die Heizleistung P der Hauptheizung 2 aufgetragen. Eine erste Kennlinie 14 zeigt für eine erste Temperatur der Umgebungsluft die Abhängigkeit der Heizleistung einer Luftwärmepumpe von der Temperatur des Wasserspeichers 4. Eine zweite Kennlinie 15 zeigt die Abhängigkeit der Heizleistung P der Luftwärmepumpe bei einer zweiten Temperatur der Umgebungsluft von der Temperatur T des Wasserspeichers 4. Die dritte Kennlinie 16 zeigt die Abhängigkeit der Heizleistung P der Luftwärmepumpe bei einer dritten Temperatur der Umgebungsluft von der Temperatur T des Wasserspeichers 4.

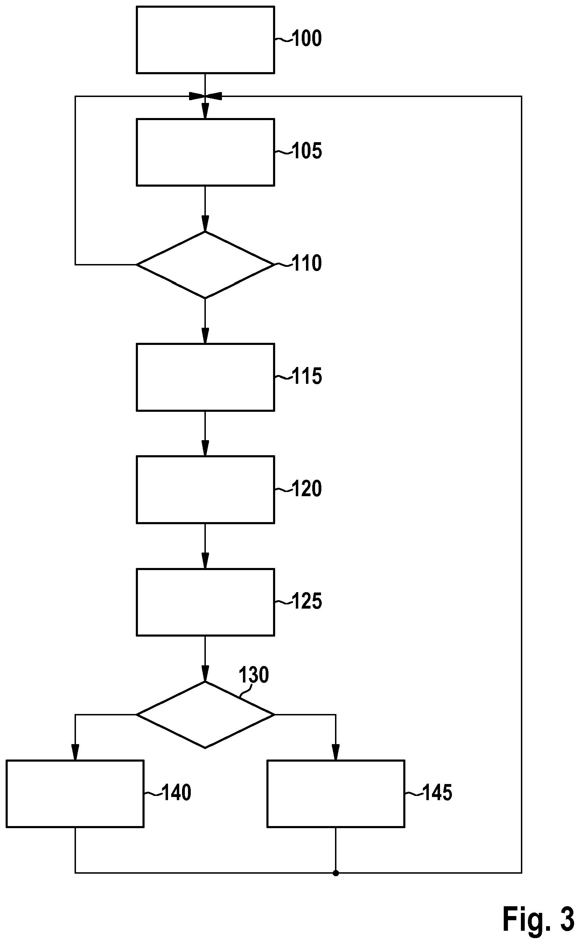

Fig. 3 zeigt in einer schematischen Darstellung einen Programmablauf zum Betreiben der Heizanlage 1.

Bei Programmpunkt 100 startet das Steuergerät 7 mit der Ansteuerung der Hauptheizung 2 und der Zusatzheizung 3. Bei Programmpunkt 100 sind bereits die Betriebstemperatur für das Wasser des Wasserspeichers 4 und die Zeitdauer im Datenspeicher 9 abgelegt. Abhängig von der gewählten Ausführung kann der Wert für die Betriebstemperatur des Wasserspeichers 4 und der Wert für die Zeitdauer auch bei Programmpunkt 100 von einer Bedienperson eingegeben werden. Die Zeitdauer 9 legt fest, in welcher Zeit die Heizanlage 1 den Wasserspeicher 4 auf die Betriebstemperatur aufheizen muss.

Bei einem folgenden Programmpunkt 105 erfasst das Steuergerät 7 mithilfe des zweiten Temperatursensors 13 die Temperatur des Wasserspeichers 4. Anschließend vergleicht das Steuergerät 7 bei Programmpunkt 110, ob die gemessene Temperatur des Wasserspeichers 4 unter der Betriebstemperatur liegt. Liegt die gemessene Temperatur des Wasserspeichers 4 über der Betriebstemperatur, so wird zu Programmpunkt 105 zurückverzweigt. Ergibt die Abfrage bei Programmpunkt 110, dass die gemessene Temperatur des Wasserspeichers 4 unter der Betriebstemperatur liegt, so wird zu Programmpunkt 115 verzweigt.

Bei Programmpunkt 115 berechnet das Steuergerät 7 die Heizleistung der Hauptheizung 2. Abhängig von der gewählten Ausführungsform kann die Heizleistung der Hauptheizung 2 in Tabellen oder Kennfeldern abgelegt sein. Zudem kann das Steuergerät 7 die Heizleistung der Hauptheizung 2 nach folgender Formel berechnen:

$$P = \frac{P_{th}(T_a, T_c) + P_{th}(T_a, T_m)}{2}$$

Mit P ist die gemittelte Heizleistung der Hauptheizung 2 bezeichnet. Mit $P_{th}$ ist die Heizleistung der Hauptheizung 2 an einem bestimmten Betriebspunkt in Abhängigkeit von der Temperatur Ta des Mediums der Wärmepumpe und in Abhängigkeit von der aktuellen gemessenen Temperatur des Wasserspeichers Tc bzw. in Abhängigkeit von der Betriebstemperatur Tm bezeichnet.

Die Heizleistung für die Betriebspunkte wird aus Kennfeldern bzw. Kenndaten aus dem Speicher 9 ausgelesen. Zudem erfasst das Steuergerät 7 mithilfe des ersten Temperatursensors 12 die Temperatur des Mediums der Wärmepumpe. In diesem Fall ist die Wärmepumpe beispielsweise als Luftwärmepumpe ausgebildet. Dabei erfasst das Steuergerät 7 mithilfe des ersten Temperatursensors 12 die Temperatur der Umgebungsluft. Zudem erfasst das Steuergerät 7 mithilfe des zweiten Temperatursensors 13 die aktuelle Temperatur des Wasserspeichers 4. Mithilfe der beschriebenen Formel wird die aktuelle Heizleistung der Hauptheizung 2 und die Heizleistung der Hauptheizung bei Erreichen der Betriebstemperatur im Wasserspeicher 4 aufsummiert und gemittelt. Damit ist eine grobe durchschnittliche Berechnung der Heizleistung der Hauptheizung 2 möglich. Abhängig von der gewählten Ausführungsform können auch andere Berechnungsverfahren zur Ermittlung der Heizleistung der Hauptheizung 2 verwendet werden.

Bei einem folgenden Programmpunkt 120 berechnet das Steuergerät 7 die Heizenergie, die erforderlich ist, um den Wasserspeicher 4 von der aktuellen Temperatur auf die Betriebstemperatur aufzuheizen. Dabei kann folgende Formel verwendet werden:

$$Q = (T_m - T_c) \cdot C_p \cdot \rho \cdot \frac{V_t}{3.6 \cdot 10^6}$$

In der Formel ist mit Q die benötigte Energie zum Aufheizen des Wasserspeichers 4, mit Tm die Betriebstemperatur, mit Tc die aktuelle Temperatur, mit Cp die spezifische Wärmekapazität von Wasser (4,186 kJ/kg K), mit $\rho$ die Dichte von Wasser (998 kg/m$^3$) und mit Vt das Volumen des Wasserspeichers in m$^3$ bezeichnet.

Bei einem folgenden Programmpunkt 125 berechnet das Steuergerät 7 die Heizleistung, die erforderlich ist, um innerhalb der vorgegebenen Zeitdauer den Wasserspeicher 4 auf die vorgegebene Betriebstemperatur aufzuheizen. Dabei kann folgende Formel verwendet werden:

$$P_{min} = \frac{Q}{t}$$

$P_{min}$ ist die minimale Heizleistung, die erforderlich ist, um innerhalb der vorgegebenen Zeitdauer den Wasserspeicher 4 auf die Betriebstemperatur zu erhöhen. Mit Q ist die Energie bezeichnet, die erforderlich ist, um den Wasserspeicher 4 auf die Betriebstemperatur aufzuheizen. Mit t ist die vorgegebene Zeitdauer bezeichnet.

Bei einem folgenden Programmpunkt 130 vergleicht das Steuergerät 7 die Heizleistung der Hauptheizung 2 mit der benötigten Heizleistung. Ergibt der Vergleich, dass die Heizleistung der Hauptheizung 2 größer ist als die benötigte Heizleistung, so wird zu Programmpunkt 140 verzweigt.

Bei Programmpunkt 140 steuert das Steuergerät 7 nur die Hauptheizung 2 an, um den Wasserspeicher 4 auf die vorgegebene Betriebstemperatur aufzuheizen.

Ergibt die Überprüfung bei Programmpunkt 130, dass die durchschnittliche Heizleistung der Hauptheizung 2 kleiner ist als die benötigte Heizleistung, so wird zu Programmpunkt 145 verzweigt.

Bei Programmpunkt 145 steuert das Steuergerät 7 sowohl die Hauptheizung 2 als auch die Zusatzheizung 3 an, um den Wasserspeicher 4 innerhalb der vorgegebenen Zeitdauer auf die vorgegebene Betriebstemperatur aufzuheizen.

Anschließend wird zu Programmpunkt 105 zurückverzweigt. Abhängig von der gewählten Ausführungsform kann während des Aufheizens das Steuergerät 7 zu Programmpunkt 105 zurückverzweigen und prüfen, ob die Heizleistung der Hauptheizung 2 ausreicht, um ohne die Zusatzheizung 3 den Wasserspeicher 4 auf die gewünschte Betriebstemperatur innerhalb der vorgegebenen Zeitdauer aufzuheizen. Dabei wird während des Aufheizens des Wasserspeichers auf die Betriebstemperatur überprüft, ob die Heizleistung der Hauptheizung ausreicht, um den Wasserspeicher innerhalb der Zeitdauer auf die Betriebstemperatur aufzuheizen. Abhängig von dem Ergebnis wird die Zusatzheizung abgeschaltet oder dazugeschaltet. Damit wird während des Aufheizvorganges ein optimaler Einsatz der Zusatzheizung erreicht. Wird z.B. während des Aufheizens mit der Hauptheizung und der Zusatzheizung festgestellt, dass die Hauptheizung ausreicht, um den Wasserspeicher innerhalb der Zeitdauer ohne weitere Unterstützung durch die Zusatzheizung aufzuheizen, so wird die Zusatzheizung abgeschaltet.

Wird jedoch z.B. während des Aufheizens nur mit der Hauptheizung festgestellt, dass die Hauptheizung nicht ausreicht, um den Wasserspeicher innerhalb der Zeitdauer ohne weitere Unterstützung durch die Zusatzheizung aufzuheizen, so wird die Zusatzheizung dazugeschaltet.

Dadurch wird erreicht, dass die Zusatzheizung nur dann eingesetzt wird, wenn die Hauptheizung alleine nicht schnell genug den Wasserspeicher 4 auf die Betriebstemperatur aufheizen kann.

Die Hauptheizung 2 kann beispielsweise als Wärmepumpe, insbesondere als Luftwärmepumpe, Bodenwärmepumpe oder Solewärmepumpe ausgebildet sein. Bei Verwendung der Luftwärmepumpe stellt die Umgebungsluft das Medium dar. Bei Verwendung der Bodenwärmepumpe stellt der Boden das Medium dar. Somit wird bei dieser Ausführungsform die Temperatur des Bodens erfasst, um die Heizleistung der Wärmepumpe zu ermitteln. Zudem kann die Hauptheizung 2 in Form einer Solewärmepumpe ausgebildet sein.

Abhängig von der gewählten Ausführungsform kann beispielsweise die Betriebstemperatur im Bereich zwischen 35°C und 43°C liegen. Zudem kann beispielsweise die vorgegebene Zeitdauer im Bereich zwischen einer und fünf Stunden liegen.

Abhängig von der gewählten Ausführungsform kann die Zusatzheizung 3 beispielsweise in Form einer elektrischen Heizung ausgebildet sein.

Der Wirkungsgrad der Wärmepumpe, d.h. die Heizleistung der Wärmepumpe hängt von der Differenz zwischen der aktuellen Temperatur des Wasserspeichers 4 und der Betriebstemperatur ab. Je größer die Differenz zwischen der aktuellen Temperatur des Wasserspeichers 4 und der vorgegebenen Betriebstemperatur ist, umso größer ist auch die Heizleistung der Wärmepumpe. Zudem hängt die Heizleistung der Wärmepumpe von der Temperatur des Mediums der Wärmepumpe ab. Je höher die Temperatur des Mediums der Wärmepumpe, umso höher ist die Heizleistung der Wärmepumpe. Anstelle der Berechnung der Heizleistung können Kennfelder, Kennlinien und Formeln abgelegt sein. Beispielsweise kann ein Kennfeld oder eine Kennlinie abgelegt sein, in der abhängig von der Temperatur des Mediums und der Temperatur des Wasserspeichers die Heizleistung der Wärmepumpe abgelegt ist.

Bei der Verwendung von Kennfeldern kann zwischen einzelnen Betriebspunkten mithilfe einer Interpolation der entsprechende Wert für die Heizleistung der Hauptheizung ermittelt werden.

## Patentansprüche

1. Verfahren zum Steuern einer Heizanlage (1) für einen Wasserspeicher (4), wobei die Heizanlage (1) eine Hauptheizung (2) und eine Zusatzheizung (3) aufweist, wobei zum Steuern der Hauptheizung (2) und der Zusatzheizung (3) ein vorgebbarer Wert für eine Betriebstemperatur des Wassers im Wasserspeicher (4) und ein vorgebbarer Wert für eine Zeitdauer verwendet werden, wobei nur die Hauptheizung (2) eingesetzt wird, um das Wasser auf die Betriebstemperatur in der Zeitdauer aufzuheizen, wenn eine Heizleistung der Hauptheizung (2) ausreicht, und wobei zusätzlich die Zusatzheizung (3) eingesetzt wird, um das Wasser im Wasserspeicher (4) auf die Betriebstemperatur aufzuheizen, wenn die Heizleistung der Hauptheizung (2) nicht ausreicht, um das Wasser auf die Betriebstemperatur in der Zeitdauer aufzuheizen, wobei die Hauptheizung als Wärmepumpe (2) ausgebildet ist, wobei abhängig von der Temperatur des Wasserspeichers (4) und der Betriebstemperatur und abhängig von einer Temperatur eines Mediums, aus dem die Wärmepumpe (2) Energie bezieht, eine Heizleistung der Wärmepumpe (2) ermittelt wird, wobei abhängig von der Temperatur des Wasserspeichers (4) und der Betriebstemperatur eine Aufheizenergie ermittelt wird, die zum Aufheizen des Wasserspeichers (4) auf die Betriebstemperatur notwendig ist, und wobei abhängig von der Aufheizenergie und der Heizleistung der Wärmepumpe (2) überprüft wird, ob die Wärmepumpe (2) den Wasserspeicher innerhalb der Zeitdauer auf die Betriebstemperatur aufheizen kann.

2. Verfahren nach Anspruch 1, wobei eine Heizleistung der Hauptheizung (2) ermittelt wird, wobei eine Aufheizenergie ermittelt wird, die zum Aufheizen des Wasserspeichers (4) auf die Betriebstemperatur notwendig ist, und wobei abhängig von der Aufheizenergie und der Heizleistung der Hauptheizung (2) überprüft wird, ob die Hauptheizung (2) den Wasserspeicher innerhalb der Zeitdauer auf die Betriebstemperatur aufheizen kann.

3. Verfahren nach einem der vorhergehenden Ansprüche, wobei die Zusatzheizung (3) als elektrische Heizung ausgebildet ist.

4. Verfahren nach einem der vorhergehenden Ansprüche, wobei die Wärmepumpe eine Luftwärmepumpe (2) ist, wobei das Medium Umgebungsluft ist, und wobei zur Bestimmung der Heizleistung der Luftwärmepumpe (2) eine Temperatur der Umgebungsluft gemessen und berücksichtigt wird.

5. Verfahren nach einem der vorhergehenden Ansprüche, wobei während des Aufheizens des Wasserspeichers (4) auf die Betriebstemperatur überprüft wird, ob die Heizleistung der Hauptheizung (2) ausreicht, um den Wasserspeicher innerhalb der Zeitdauer auf die Betriebstemperatur aufzuheizen, und wobei abhängig von dem Ergebnis des Vergleichs die Zusatzheizung (3) abgeschaltet oder die Zusatzheizung dazugeschaltet wird.

6. Steuergerät (7) zum Steuern einer Heizanlage (1) für einen Wasserspeicher (4), wobei die Heizanlage (1) eine Hauptheizung (2) und eine Zusatzheizung (3) aufweist, wobei das Steuergerät (7) einen Datenspeicher (9) aufweist, wobei zum Steuern der Hauptheizung (2) und der Zusatzheizung (3) im Datenspeicher (9) ein Wert für eine Betriebstemperatur des Wasserspeichers (4) und ein Wert für eine Zeitdauer abgespeichert sind, wobei die Hauptheizung (2) als Wärmepumpe (2) ausgebildet ist, wobei das Steuergerät (7) ausgebildet ist, um abhängig von der Temperatur des Wasserspeichers (4) und der Betriebstemperatur und einer Temperatur eines Mediums, aus dem die Wärmepumpe Energie bezieht, eine Heizleistung der Wärmepumpe (2) zu ermitteln, wobei das Steuergerät (7) ausgebildet ist, um abhängig von der Temperatur des Wärmespeicher und der Betriebstemperatur eine Aufheizenergie zu ermitteln, die notwendig ist, um den Wasserspeicher (4) auf die Betriebstemperatur aufzuheizen, und wobei das Steuergerät (7) ausgebildet ist, um abhängig von der Aufheizenergie und der Heizleistung der Wärmepumpe (2) zu überprüfen, ob die Wärmepumpe (2) das Wasser im Wasserspeicher (4) innerhalb der vorgegebenen Zeitdauer auf die Betriebstemperatur aufheizen kann, wobei das Steuergerät (7) ausgebildet ist, um die Hauptheizung (2) alleine anzusteuern, um das Wasser im Wasserspeicher (4) auf die Betriebstemperatur innerhalb der Zeitdauer aufzuheizen, wenn die Heizleistung der Hauptheizung (2) ausreicht, und wobei das Steuergerät (7) ausgebildet ist, um zusätzlich die Zusatzheizung (3) anzusteuern, um das Wasser im Wasserspeicher (4) auf die Betriebstemperatur aufzuheizen, wenn die Heizleistung der Hauptheizung (2) nicht ausreicht, um das Wasser auf die Betriebstemperatur innerhalb der Zeitdauer aufzuheizen.

7. Steuergerät nach Anspruch 6, wobei das Steuergerät (7) ausgebildet ist, um eine Heizleistung der Hauptheizung (2) zu ermitteln, wobei das Steuergerät (7) ausgebildet ist, um eine Aufheizenergie zu ermitteln, die notwendig ist, um den Wasserspeicher auf die Betriebstemperatur aufzuheizen, und wobei das Steuergerät (7) ausgebildet ist, um abhängig von der Aufheizenergie und der Heizleistung der Hauptheizung (2) zu überprüfen, ob die Hauptheizung (2) das Wasser im Wasserspeicher innerhalb der vorgegebenen Zeitdauer auf die Betriebstemperatur aufheizen kann.

8. Steuergerät nach einem der Ansprüche 6 oder 7, wobei die Zusatzheizung (3) als elektrische Heizung (3) ausgebildet ist, und wobei das Steuergerät (7) ausgebildet ist, um die elektrische Heizung (3) anzusteuern.

9. Steuergerät nach einem der Ansprüche 6 bis 8, wobei die Wärmepumpe (2) als Luftwärmepumpe ausgebildet ist, und wobei das Steuergerät (7) ausgebildet ist, um eine Heizleistung der Luftwärmepumpe (2) abhängig von der Temperatur der Umgebungsluft zu bestimmen.

10. Steuergerät nach einem der Ansprüche 6 bis 9, wobei das Steuergerät (7) ausgebildet ist, um während des Aufheizens des Wasserspeichers (4) auf die Betriebstemperatur zu überprüfen, ob die Heizleistung der Hauptheizung (2) ausreicht, um den Wasserspeicher (4) innerhalb der Zeitdauer auf die Betriebstemperatur aufzuheizen, und wobei das Steuergerät (7) ausgebildet ist, um abhängig von dem Ergebnis des Vergleichs die Zusatzheizung (3) abzuschalten bzw. die Zusatzheizung dazuzuschalten.

**Claims**

1. Method for controlling a heating system (1) for a water tank (4), wherein the heating system (1) has a main heater (2) and an additional heater (3), wherein, to control the main heater (2) and the additional heater (3), a predefinable value for an operating temperature of the water in the water tank (4) and a predefinable value for a time period are used, wherein only the main heater (2) is used to heat the water to the operating temperature in the time period if a heat output from the main heater (2) is sufficient, and wherein, in addition, the additional heater (3) is used in order to heat the water in the water tank (4) to the operating temperature if the heat output from the main heater (2) is not sufficient to heat the water to the operating temperature in the time period, wherein the main heater is formed as a heat pump (2), wherein, depending on the temperature of the water tank (4) and the operating temperature and depending on a temperature of a medium from which the heat pump (2) draws energy, a heat output from the heat pump (2) is determined, wherein, depending on the temperature of the water tank (4) and the operating temperature, a heating energy which is needed to heat the water tank (4) to the operating temperature is determined, and wherein, depending on the heating energy and the heat output from the heat pump (2), a check is made to see whether the heat pump (2) is able to heat the water tank to the operating temperature within the time period.

2. Method according to Claim 1, wherein a heat output from the main heater (2) is determined, wherein a heating energy which is needed to heat the water tank (4) to the operating temperature is determined, and wherein, depending on the heating energy and the heat output from the main heater (2), a check is made to see whether the main heater (2) is able to heat the water tank to the operating temperature within the time period.

3. Method according to one of the preceding claims, wherein the additional heater (3) is formed as an electric heater.

4. Method according to one of the preceding claims, wherein the pump is an air heat pump (2), wherein the medium is surrounding air, and wherein a temperature of the surrounding air is measured and taken into account in order to determine the heat output from the air heat pump (2).

5. Method according to one of the preceding claims, wherein, during the heating of the water tank (4) to the operating temperature, a check is made to see whether the heat output from the main heater (2) is sufficient to heat the water tank to the operating temperature within the time period, and wherein, depending on the result of the comparison, the additional heater (3) is switched off or the additional heater is switched on.

6. Control device (7) for controlling a heating system (1) for a water tank (4), wherein the heating system (1) has a main heater (2) and an additional heater (3), wherein the control device (7) has a data store (9), wherein, in order to control the main heater (2) and the additional heater (3), a value for an operating temperature of the water tank (4) and a value for a time period are stored in the data store (9), wherein the main heater (2) is formed as a heat pump (2), wherein the control device (7) is designed, depending on the temperature of the water tank (4) and the operating temperature and a temperature of a medium from which the heat pump draws energy, to determine a heat output from the heat pump (2), wherein the control device (7) is designed, depending on the temperature of the heat store and the operating temperature, to determine a heating energy which is needed to heat the water tank (4) to the operating temperature, and wherein the control device (7) is designed, depending on the heating energy and the heat output from the heat pump (2), to check whether the heat pump (2) is able to heat the water in the water tank (4) to the operating temperature within the predefined time period, wherein the control device (7) is designed to activate the main heater (2) on its own to heat the water in the water tank (4) to the operating temperature within the time period if the heat output from the main heater (2) is sufficient, and wherein the control device (7) is designed to, in addition, activate the additional heater (3) in order to heat the water in the water tank (4) to the operating temperature if the heat output from the main heater (2) is not sufficient to heat the water to the operating temperature within the time period.

7. Control device according to Claim 6, wherein the control device (7) is designed to determine a heating output from the main heater (2), wherein the control device (7) is designed to determine a heating energy which is needed to heat the water tank to the operating temperature, and wherein the control device (7) is designed, depending on the heating energy and the heat output from the main heater (2), to check whether the main heater (2) is able to heat the water in the water tank to the operating temperature within the predefined time period.

8. Control device according to either of Claims 6 and 7, wherein the additional heater (3) is formed as an electric heater (3), and wherein the control device (7) is designed to activate the electric heater (3).

9. Control device according to one of Claims 6 to 8, wherein the heat pump (2) is formed as an air heat pump, and wherein the control device (7) is designed to determine a heat output from the air heat pump (2), depending on the temperature of the surrounding air.

10. Control device according to one of Claims 6 to 9, wherein the control device (7) is designed, during the heating of the water tank (4) to the operating temperature, to check whether the heat output from the main heater (2) is sufficient to heat the water tank (4) to the operating temperature within the time period, and wherein the control device (7) is designed to switch off the additional heater (3) or to switch on the additional heater, depending on the result of the comparison.

**Revendications**

1. Procédé destiné à la commande d'une installation de chauffage (1) pour un réservoir d'eau (4), dans lequel l'installation de chauffage (1) présente un chauffage principal (2) et un chauffage supplémentaire (3), dans lequel une valeur pouvant être prédéfinie pour une température de service de l'eau dans le réservoir d'eau (4), d'une part, et une valeur pouvant être prédéfinie pour un laps de temps, d'autre part, sont utilisées en vue de la commande du chauffage principal (2) et du chauffage supplémentaire (3), dans lequel seul le chauffage principal (2) est employé afin de chauffer l'eau à la température de service dans le laps de temps, quand une puissance de chauffe du chauffage principal (2) est suffisante, et dans lequel le chauffage supplémentaire (3) est employé en appoint afin de chauffer l'eau dans le réservoir d'eau (4) à la température de service, quand la puissance de chauffe du chauffage principal (2) n'est pas suffisante pour réchauffer l'eau à la température de service dans le laps de temps, dans lequel le chauffage principal est conçu sous la forme d'une pompe à chaleur (2), dans lequel une puissance de chauffe de la pompe à chaleur (2) est calculée en fonction de la température du réservoir d'eau (4) et de la température de service, ainsi qu'en fonction d'une température d'un milieu à partir duquel la pompe à chaleur (2) tire son énergie, dans lequel une énergie de chauffage est calculée en fonction de la température du réservoir d'eau (4) et de la température de service qui est nécessaire en vue de chauffer le réservoir d'eau (4) à la température de service et dans lequel une vérification est réalisée en fonction de l'énergie de chauffage et de la puissance de chauffe de la pompe à chaleur (2) pour savoir si la pompe à chaleur (2) est en mesure de chauffer le réservoir d'eau à la température de service au cours du laps de temps.

2. Procédé selon la revendication 1, dans lequel une puissance de chauffe du chauffage principal (2) est calculée, dans lequel une énergie de chauffage est calculée, laquelle est nécessaire en vue du chauffage du réservoir d'eau (4) à la température de service, et dans lequel une vérification est réalisée en fonction de l'énergie de chauffage et de la puissance de chauffe du chauffage principal (2) pour savoir si le chauffage principal (2) est en mesure de chauffer le réservoir d'eau à la température de service au cours du laps de temps.

3. Procédé selon l'une des revendications précédentes, dans lequel le chauffage supplémentaire (3) est conçu sous la forme d'un chauffage électrique.

4. Procédé selon l'une des revendications précédentes, dans lequel la pompe à chaleur est une pompe à chaleur aérothermique (2), dans lequel le milieu provient de l'air ambiant et dans lequel une température de l'air ambiant est mesurée et prise en compte en vue de la détermination de la puissance de chauffe de la pompe à chaleur aérothermique (2).

5. Procédé selon l'une des revendications précédentes, dans lequel une vérification est réalisée pendant le chauffage du réservoir d'eau (4) à la température de service pour savoir si la puissance de chauffe du chauffage principal (2) est suffisante afin de chauffer le réservoir d'eau à la température de service au cours du laps de temps et dans lequel le chauffage supplémentaire (3) est mis hors circuit ou le chauffage supplémentaire est mis en route en appoint du chauffage principal en fonction du résultat de la comparaison.

6. Appareil de commande (7) destiné à la commande d'une installation de chauffage (1) pour un réservoir d'eau (4), l'installation de chauffage (1) présentant un chauffage principal (2) et un chauffage supplémentaire (3), l'appareil de commande (7) présentant une mémoire de données (9), dans lequel une valeur pour une température de service du réservoir d'eau (4) et une valeur pour un laps de temps sont enregistrées dans la mémoire de données (9) en vue de la commande du chauffage principal (2) et du chauffage supplémentaire (3), le chauffage principal (2) étant conçu sous la forme d'une pompe à chaleur (2), l'appareil de commande (7) étant conçu afin de calculer une puissance de chauffe de la pompe à chaleur (2) en fonction de la température du réservoir d'eau (4) et de la température de service, ainsi qu'en fonction d'une température d'un milieu à partir duquel la pompe à chaleur tire de l'énergie, l'appareil de commande (7) étant conçu afin de calculer une énergie de chauffage en fonction de la température de l'accumulateur de chaleur et de la température de service, laquelle énergie de chauffage est nécessaire afin de chauffer le réservoir d'eau (4) à la température de service, et l'appareil de commande (7) étant conçu afin de vérifier si la pompe à chaleur (2) est en mesure de chauffer l'eau dans le réservoir d'eau (4) à la température de service au cours du laps de temps préalablement défini, en fonction de l'énergie de chauffage et de la puissance de chauffe de la pompe à chaleur (2), l'appareil de commande (7) étant conçu afin de piloter le chauffage principal (2) à lui seul, afin de chauffer l'eau dans le réservoir d'eau (4) à la température de service au cours du laps de temps, quand la puissance de chauffe du chauffage principal (2) est suffisante, et l'appareil de commande (7) étant conçu afin de piloter le chauffage supplémentaire (3) comme un chauffage d'appoint, afin de chauffer l'eau dans le réservoir d'eau (4) à la température de service, quand la puissance de chauffe du chauffage principal (2) n'est pas suffisante afin de chauffer l'eau à la température de service au cours du laps de temps.

7. Appareil de commande selon la revendication 6, l'appareil de commande (7) étant conçu afin de calculer une puissance de chauffe du chauffage principal (2), l'appareil de commande (7) étant conçu afin de calculer une énergie de chauffage qui est nécessaire afin de chauffer le réservoir d'eau à la température de service et l'appareil de commande (7) étant conçu afin de vérifier si le chauffage principal (2) est en mesure de chauffer l'eau dans le réservoir d'eau à la température de service au cours du laps de temps préalablement défini, en fonction de l'énergie de chauffage et de la puissance de chauffe du chauffage principal (2).

8. Appareil de commande selon l'une des revendications 6 ou 7, le chauffage supplémentaire (3) étant conçu sous la forme d'un chauffage (3) électrique et l'appareil de commande (7) étant conçu afin de piloter le chauffage (3) électrique.

9. Appareil de commande selon l'une des revendications 6 à 8, la pompe à chaleur (2) étant conçue sous la forme d'une pompe à chaleur aérothermique et l'appareil de commande (7) étant conçu afin de déterminer une puissance de chauffe de la pompe à chaleur aérothermique (2) en fonction de la température de l'air ambiant.

10. Appareil de commande selon l'une des revendications 6 à 9, l'appareil de commande (7) étant conçu afin de vérifier pendant le chauffage du réservoir d'eau (4) à la température de service si la puissance de chauffe du chauffage principal (2) est suffisante afin de chauffer le réservoir d'eau (4) à la température de service au cours du laps de temps et l'appareil de commande (7) étant conçu afin de mettre hors circuit le chauffage supplémentaire (3), respectivement afin de mettre en route le chauffage supplémentaire en appoint du chauffage principal en fonction du résultat de la comparaison.

**Fig. 1**

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2559953 A1
- US 2010083950 A